# EUROPEAN PATENT SPECIFICATION

(11) **EP 0 275 323 B1**
(45) Date of publication and mention of the grant of the patent: **20.04.1994**
(21) Application number: 87904732.2
(22) Date of filing: 16.07.1987
(51) Int. Cl.: G11B 11/10, G11B 5/02

(54) **FERROMAGNETIC RECORDING APPARATUS**
FERROMAGNETISCHES AUFZEICHNUNGSGERÄT
APPAREIL D'ENREGISTREMENT PHOTOMAGNETIQUE

(30) Priority: 31.07.1986 JP 180416/86
(43) Date of publication of application: 27.07.1988
(73) Proprietor: SONY CORPORATION, Tokyo 141 (JP)
(72) Inventor: HORIMAI, Hideyoshi, 6-chome Shinagawa-ku Tokyo 141 (JP); AOKI, Yoshio, Shinagawa-ku Tokyo 141 (JP)
(74) Representative: Thomas, Christopher Hugo
(86) International application number: PCT/JP87/00519
(87) International publication number: WO 88/01093

(56) References cited:
- EP-A- 0 164 745
- JP-A- 6 266 449
- JP-A-61 153 875
- JP-A-62 134 838
- APPLIED OPTICS. vol. 25, no. 4, February 1986, NEW YORK US pages 483 - 489; M.Ojima et al: "Compact magnetooptical disk for coded data storage"

## Description

This invention relates to magneto-optical recording apparatus.

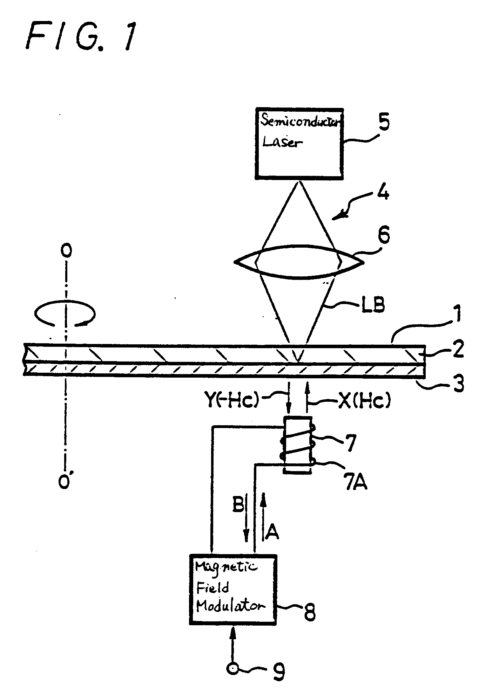

Figure 1 shows a previously proposed magneto-optical recording apparatus which is capable of rewriting information by overwriting.

A magneto-optical disc, 1 which in the present example is formed by depositing a perpendicular magnetization layer 3 on a glass substrate 2, can be rotated about a central axis 0 - 0'. An optical head section 4 irradiates a laser light LB on the layer 3. The optical head section 4 comprises a semiconductor laser element 5 and a lens 6, and is arranged to be movable along the radial direction of the disc 1, maintaining a predetermined distance from the surface thereof. The optical head section 4 is operative locally to irradiate the layer 3 with the laser light LB with a constant intensity continuously emitted from the laser element 5 through the lens 6, so as to elevate the temperature on the irradiated part of the layer 3 above the Curie point.

An electromagnet 7 which applies a magnetic field to the layer 3 is placed facing the optical head section 4 with the disc 1 interposed therebetween, and is arranged to be movable along the radial direction of the disc 1, associated with the optical head section 4.

A magnetic field modulating circuit 8 has its input side connected to a recording signal input terminal 9 and its output side connected to a coil 7A of the electromagnet 7. By the magnetic field modulating circuit 8, a current, the phase of which is inverted in response to recording signals supplied thereto through the terminal 9, for example a current flowing in the direction of an arrow A, is supplied to the coil 7A when the signal level of a recording signal is at a high level "1", and a current flowing in the direction of an arrow B is supplied to the coil 7A when the signal level of a recording signal is at a low level "0", whereby the electromagnet 7 generates a magnetic field as indicated by an arrow X when the signal level of the recording signal is at the high level "1", and a magnetic field as indicated by an arrow Y when the signal level of the recording signal is at the low level "0". The magnetic fields indicated by the arrows X and Y are oppositely directed but the intensities thereof are equal. If the intensities of the magnetic field indicated by the arrow X and of the magnetic field indicated by the arrow Y are designated Hc and -Hc, respectively, | ± Hc | are respectively determined to be intensities such that the magnetizing direction of the layer 3 can be directed in the direction of the respective magnetic fields.

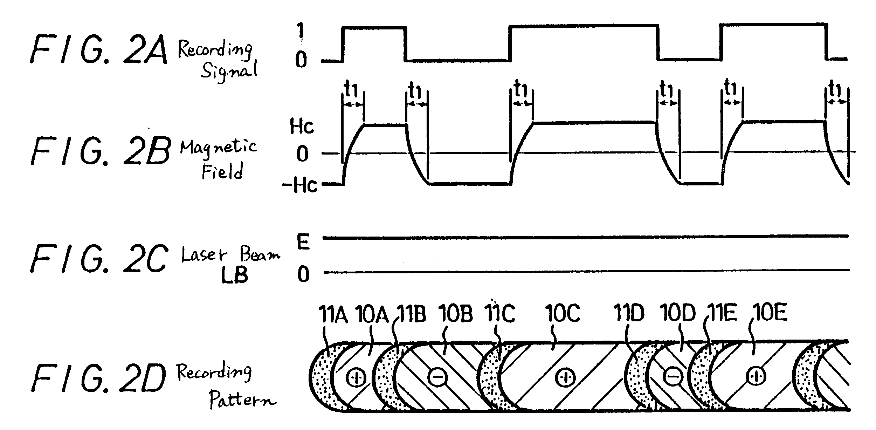

When a recording signal, for example, as shown in Figure 2A, is supplied to the magnetic field modulating circuit 8, the electromagnet 7 produces a magnetic field as shown in Figure 2B, and this magnetic field is to be applied to the layer 3. Since the layer 3 has been irradiated with the laser light LB with a constant intensity E which can elevate the temperature of the layer 3 above the curie point, as shown in Figure 2C, there are consequently recorded recording patterns 10A, 10B ...10E, as typically shown in Figure 2D, in a recording track 3A on the layer 3. Incidentally, the recording of ⊕ and ⊖ of this case respectively indicate the magnetization in the upward direction (X in Figure 1) and in the downward direction (Y in Figure 1).

Thus, a minute portion on the layer 3 is heated above the Curie point with the laser light LB, the heated portion is moved, and when the temperature thereof becomes in the proximity of the Curie point, the portion in the proximity of the Curie point is magnetized in the direction of the magnetic field which is modulated in accordance with the recording signal. When the temperature is then lowered, the magnetization is maintained thereby to record signals magneto-optically, taking a portion of a size smaller than that of the heated minute portion to be a unit. With this magneto-optical recording apparatus, regardless of any information previously recorded on the layer 3, it is possible to record new information by overwriting.

However, when the magnetic field which is applied to the layer 3 is inverted in its direction in accordance with the signal level of the recording signal, a definite time period t₁ as shown in Figure 2B is required. During the inverting time period t₁, although the magnetic field with the intensity | ± Hc |, necessary for orientating the magnetization in the direction of the magnetic field, is not applied to the layer 3, since it is continuously irradiated with the laser light LB with the constant intensity E, regions in which the noise level is increased to a level at which error easily occur during reproduction, that is, so-called noise-up regions 11A, 11B ... 11E, as shown in Figure 2D, occur in the recording track 3A corresponding to the magnetic field inverting time period t₁, thereby incurring a disadvantage that high density recording cannot be satisfactorily carried out. A magneto-optical recording apparatus according to the preamble of claim 1 is known from US-A-4,495,530

European patent specification EP-A2-0 164 745 discloses a magneto-optical recording apparatus where a current to drive a laser beam is only provided when the external magnetic field has reached a level sufficient to invert the magnetic direction of the recording medium, but in which signal recording is performed by modulation of a light beam, with a constant level external magnetic field.

According to the present invention there is provided a magneto-optical recording apparatus for recording and reproducing information on a magneto-optical recording medium having a perpendicular magnetization direction, the apparatus comprising; laser means for emitting a light beam onto the recording medium; and
said magnetic field generating means, is responsive to a magnetic field modulating means for generating an external magnetic field modulated in accordance with binary information signals; characterised in that
light modulating means receive an inversion signal corresponding to each inversion of said external magnetic field, for providing a current to drive said laser means only while said recording medium has applied thereto an external magnetic field sufficient to invert the magnetization direction of said recording medium and not during the inversion of the external magnetic field; and
signal inversion detecting means is provided for receiving the binary information signals and thereby detecting the inversion of the external magnetic field to derive said inversion signal for supply to said light modulating means.

The invention will now be described by way of example with reference to the accompanying drawings, throughout which like parts are referred to by like references, and in which:
Figure 1 is a diagram showing an example of a previously proposed magneto-optical recording apparatus;
Figure 2 is a diagram for explaining Figure 1;
Figure 3 is a diagram showing an embodiment of magneto-optical recording apparatus according to the present invention;
Figure 4 is a diagram for explaining Figure 3;
Figure 5 is a diagram showing another embodiment of the present invention;
Figure 6 is a diagram for explaining Figure 5;
Figure 7 is a diagram showing a further embodiment of the present invention; and
Figure 8 is a diagram for explaining Figure 7.

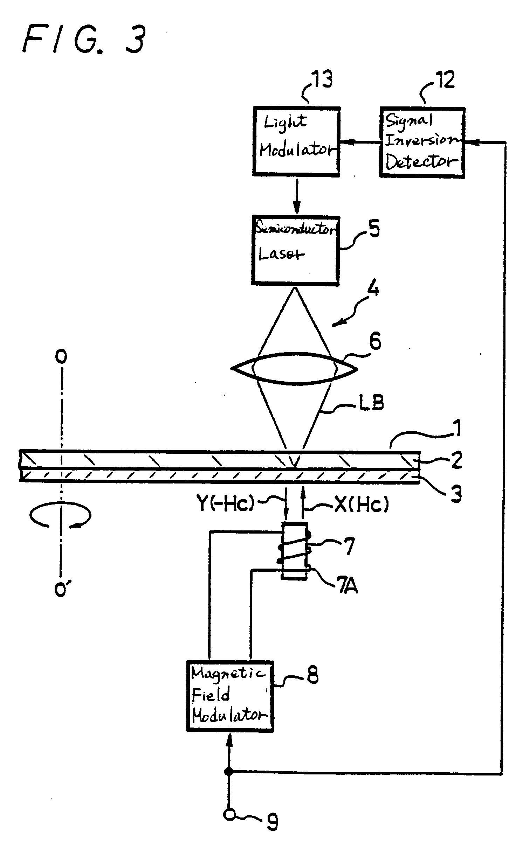

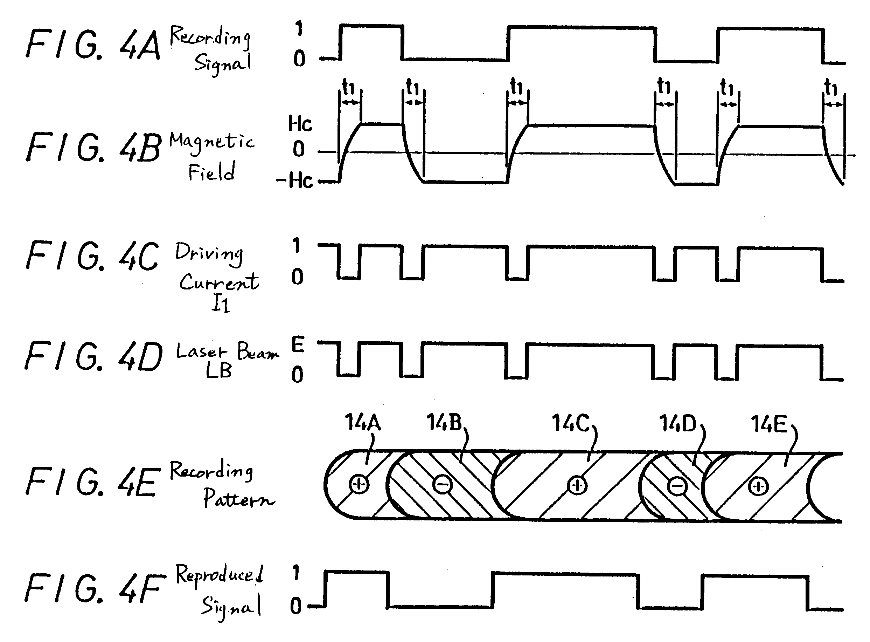

In the present embodiment of Figures 3 and 4, a recording signal inputted through the recording signal input terminal 9 is supplied to a signal inversion detecting circuit 12, wherein, when the recording signal changes its signal level, that is, the recording signal inverts its phase, the detecting circuit 12 derives a signal inversion detecting output at its output side, and the signal inversion detecting signal is supplied to a light modulating circuit 13. The light modulating circuit 13 is operative to supply the semiconductor laser element 5 in DC fashion with a driving current I₁ necessary for it to generate the laser light LB with the constant intensity E. Moreover, when the signal inversion detecting signal is supplied from the detecting circuit 12, a monostable multivibrator, for example, is driven so as not to supply the laser element 5 with the driving current I₁ for the operating time period of the monostable multivibrator, that is, for the time period t₁ during which the magnetic field is inverting. In other words, the light modulating circuit 13 is operative to supply the laser element 5 with the driving current I₁ only when the layer 3 of the magneto-optical disc 1 has applied thereto the magnetic field with the intensity | ± Hc | sufficient to orientate the magnetizing direction of the layer 3 in the direction of the magnetic field. The remaining parts of the apparatus are the same as in the apparatus example of Figure 1.

When a recording signal as shown in Figure 4A, similar to that shown in Figure 2A, is supplied thereto, the electromagnet 7 generates a magnetic field as shown in Figure 4B, similar to that shown in Figure 2B, that is, the magnetic field has the intensity | ± Hc | sufficient to orientate the magnetizing direction of the layer 3 in the direction of the magnetic field, and for the magnetic field inverting time period t₁. Meanwhile, the light modulating circuit 13 supplies the laser element 5 with the driving current I₁, as shown in Figure 4C, only for the period in which the layer 3 has applied thereto the magnetic field which has the intensity | ± Hc | sufficient to orientate the magnetizing direction of the layer 3 to the direction of the magnetic field. Then, the laser element 5 generates the laser light LB having the intensity E corresponding to the driving current I₁, as shown in Figure 4D. As described above, in the embodiment of Figure 3, since the layer 3 is irradiated with the laser light LB only when the magnetic field which has the intensity | ± Hc | sufficient to orientate the magnetizing direction of the layer 3 to the direction of the magnetic field is applied thereto, and the laser light LB is not emitted for the time period t₁ during which the magnetic field is being inverted, the noise-up region is not formed in the recording track 3A of the layer 3, and recording patterns 14A, 14B ... 14E, as shown in Figure 4E, are formed corresponding to the recording signal shown in Figure 4A, whereby a reproduced signal without errors, as shown in Figure 4F, can be obtained upon reproduction. High density can therefore be satisfactorily carried out.

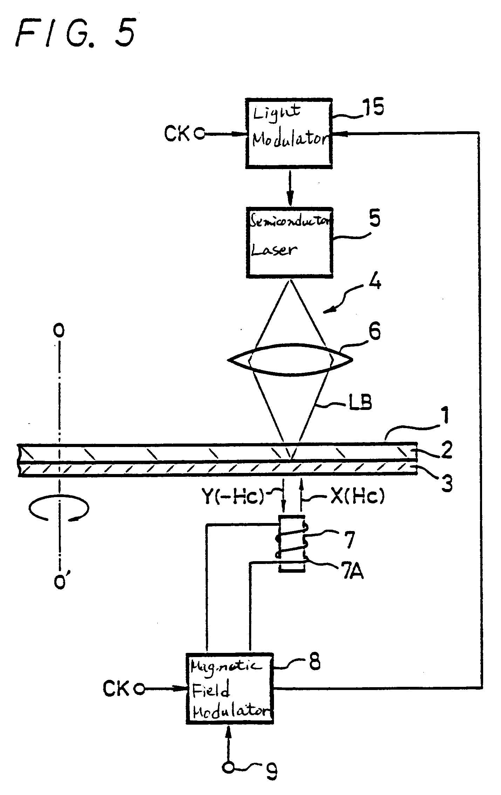

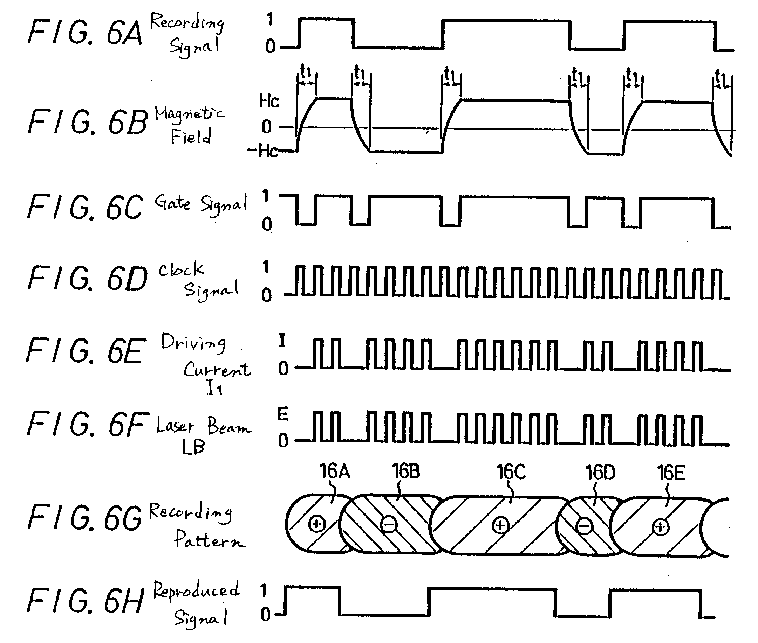

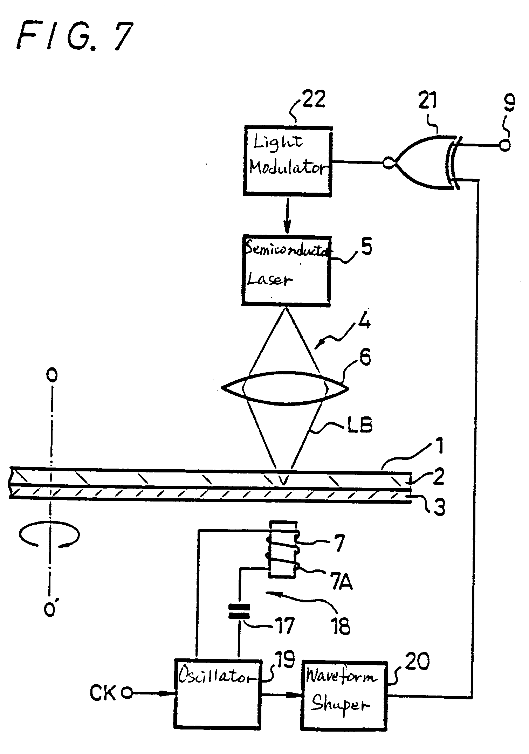

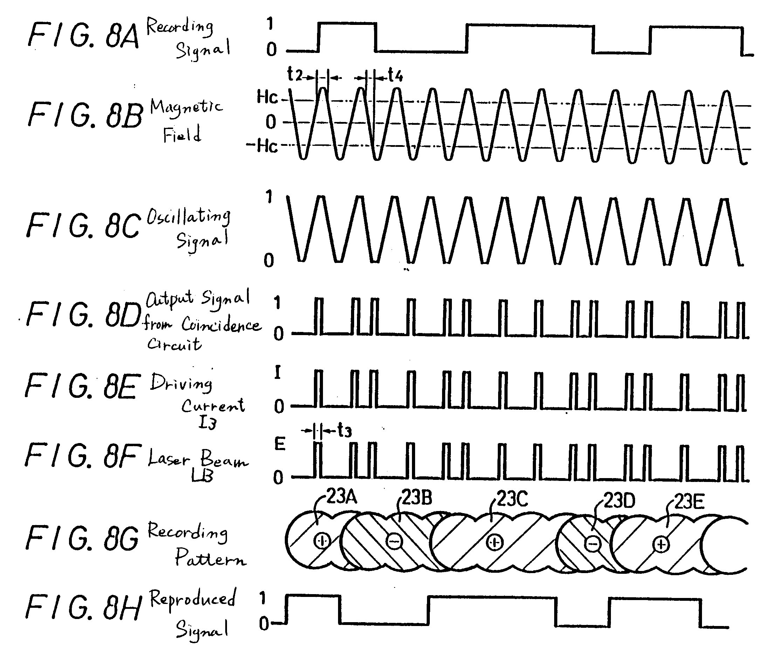

In the embodiment of Figures 5 and 6, the laser light LB is emitted pulsatively thereby to prolong the life of the semiconductor laser element 5.

In this embodiment, the recording signal supplied to the magnetic field modulating circuit 8 is synchronized with a clock signal CK, and the electromagnetic 7 generates a magnetic field on the basis of the synchronized recording signal. The magnetic field modulating circuit 8 is operative, corresponding to the magnetic field generated in the electromagnetic 7, to form a signal which is at the high level "1" while the layer 3 has applied thereto the magnetic field which has the intensity | ± Hc | sufficient to orientate the magnetizing direction of the layer 3 to the direction of the magnetic field, and at the low level "0" for the magnetic field inverting time period t₁. This signal is supplied to a light modulating circuit 15 as a gate signal. The output from the magnetic field modulating circuit 8 can be supplied to a signal inversion detecting circuit as shown in Figure 3, the output therefrom being supplied to a monostable multivibrator, and the output from the monostable multivibrator is used to form the gate signal. Meanwhile, the clock signal CK is supplied to the light modulating circuit 15 such that it can supply the laser element 5 with a driving current I₂ which is controlled by the clock signal CK. The remaining part of this embodiment is the same as the example of Figure 1.

In the embodiment of Figure 5, a magnetic field as shown in Figure 6B is generated from the electromagnet 7 in accordance with a recording signal synchronized with the clock signal CK as shown in Figure 6A. Since the light modulating circuit 15 is supplied with the gate signal as shown in Figure 6C and the clock signal CK as shown in Figure 6D, the laser element 5 is supplied with the driving current I₂ as shown in Figure 6E, so that the laser element 5 generates the laser light LB as shown in Figure 6F corresponding to the driving current I₂. Therefore, in the embodiment of Figure 5, recording patterns 16A, 16B ... 16E as shown in Figure 6E are formed on the recording track 3A of the layer 3. In this case, since the laser light LB is not radiated on the layer 3 for the magnetic field inverting time period t₁; as in the embodiment of Figure 3, the noise-up region will not be formed, so that upon reproduction an error-free reproduced signal, as shown in Figure 6H, can be obtained corresponding to the recording signal.

In the embodiment of Figures 7 and 8, a resonance circuit 18 is formed of a serial connection of the coil 7A of the electromagnet 7 and a capacitor 17, so as to provide an oscillating circuit 19 which employs the coil 7A of the electromagnet 7 as an oscillating coil. The capacitance value C of the capacitor 17 is selected such that the resonance frequency f₀ of the resonance circuit 18 is a frequency 2fm, twice the maximum frequency fm of the recording signal. Thus, the electromagnet 7 generates a magnetic field as shown in Figure 8B which is inverted in its direction at the frequency 2fm, and this magnetic field is applied to the layer 3. In this case, the peak value of the magnetic field is made larger than the intensity | ± Hc | which is necessary to orientate the magnetizing direction of the layer 3 to the direction of the magnetic field.

The oscillating signal generated in the oscillatory circuit 19 is supplied through a waveform shaping circuit 20 to one input of a coincidence circuit 21 arranged to make the peak portions of the oscillating signal flat, as shown in Figure 8C, as well as carry out a necessary level adjustment.

The recording signal supplied to the terminal 9 is also supplied to the other input terminal of the coincidence circuit 21, such that the coincidence circuit 21 derives the high level signal at its output side when the recording signal and the oscillating signal are both at the high level or both at the low level, and the high level signal is supplied to a light modulating circuit 22. The light modulating circuit 22 supplies the laser element 5 with a pulsative driving current I₃ corresponding to the high level signal only, when the high level signal is supplied from the coincidence circuit 21 thereto, whereby the laser element 5 emits the laser light LB corresponding to the driving current I₃. Here, it is necessary to determine the pulse width of the driving current I₃, that is, the pulse width of the laser light LB, to be a time period t₃ which is shorter than the time period t₂ for which the intensity of the magnetic field becomes larger than | ± Hc |.

In this embodiment, the light modulating circuit 22 and the oscillatory circuit 19 are both supplied with the clock signal CK, so as to synchronize the laser light LB with the magnetic field.

In the embodiment of Figure 7, the coincidence circuit 21 is supplied with the oscillating signal as shown in Figure 8C at one of its input terminals, so that when the coincidence circuit 21 is supplied, for example, with the recording signal as shown in Figure 8A at the other input terminal, the coincidence circuit 21 can derive at its output side the high level signal "1" as shown in Figure 8D only when the record signal and the oscillating signal are both at the high level or both at the low level. Therefore, the light modulating circuit 22 supplies the laser element 5 with the driving current I₃ as shown in Figure 8E corresponding to the output signals from the coincidence circuit 21, and accordingly the laser element 5 emits the laser light LB as shown in Figure 8F corresponding to the driving current I₃. Meanwhile, the electromagnet 7 generates the magnetic field as shown in Figure 8B, which is synchronized with the pulsative laser light LB, and this magnetic field is applied to the layer 3, so that recording patterns 23A, 23B ... 23E as shown in Figure 8G are formed on the layer 3. For a time period t₄ during which the intensity of the magnetic field generated from the electromagnet 7 is below the intensity | ± Hc | sufficient to orientate the magnetizing direction of the layer 3 to the direction of the magnetic field, the laser element 5 is not supplied with the driving current I₃, and accordingly the layer 3 is not irradiated with the laser light LB in this period, so that a recording pattern is formed as shown in Figure 8G without forming the noise-up region; as in the embodiments of Figures 3 and 5, whereby, upon reproduction, an error-free reproduced signal can be obtained as shown in Figure 8H. Thus high density recording can be satisfactorily carried out.

Also, since the laser light LB is pulsatively emitted, the life span of the laser element 5 can be prolonged.

Further, since the pulse width of the lase light LB is made short, it is possible only to heat up the perpendicular magnetization layer 3, with the result that the heating efficiency is increased, and the reliability of the protective layer is also improved. Moreover, since the heat distribution on layer 3 is constant at every pulse of the laser light LB, the generation of peak shift and jitter can be avoided.

Further, since the magnetic field to be applied to the layer 3 is generated by the oscillatory circuit 19 comprising the resonance circuit 18 formed by the electromagnet 7 and the capacitor 17, it is readily possible to design an electric power source circuit for the electromagnet 7 and the oscillatory circuit 19, and to make the electric power source circuit smaller, so reducing production costs.

## Claims

1. A magneto-optical recording apparatus for recording and reproducing information on a magneto-optical recording medium (1) having a perpendicular magnetization direction, the apparatus comprising;
laser means (5) for emitting a light beam onto the recording medium (1); and
said magnetic field generating means (7) is responsive to a magnetic field modulating means (8) for generating an external magnetic field modulated in accordance with binary information signals; characterised in that
light modulating means (13) receive an inversion signal corresponding to each inversion of said external magnetic field, for providing a current to drive said laser means (5) only while said recording medium (1) has applied thereto an external magnetic field sufficient to invert the magnetization direction of said recording medium (1) and not during the inversion of the external magnetic field; and
signal inversion detecting means (12) is provided for receiving the binary information signals and thereby detect the inversion of the external magnetic field to derive said inversion signal for supply to said light modulating means (13).

2. Apparatus according to claim 1 wherein said light beam is emitted a predetermined time after said signal inversion detecting means (12) has detected the inversion of said external magnetic field.

3. Apparatus according to claim 1 or claim 2 wherein said light modulating means (13) is driven by a clock signal such that said laser beam is intermittently emitted.

## Patentansprüche

1. Magneto-optische Aufzeichnungsvorrichtung zum Aufzeichnen und Reproduzieren einer Information auf einem magneto-optischen Aufzeichnungsmedium (1), das eine senkrechte Magnetisierungsrichtung hat, wobei die Vorrichtung umfaßt:
Lasermittel (5) zum Emittieren eines Lichtstrahls auf das Aufzeichnungsmedium (1) und ein Magnetfeld erzeugende Mittel (7), die auf ein Magnetfeld modulierende Mittel (8) antworten, um ein externes Magnetfeld zu erzeugen, das gemäß binären Informationssignalen moduliert ist;
**dadurch gekennzeichnet**, daß
lichtmodulierende Mittel (13) ein Umkehrungssignal entsprechend jeder Umkehrung des externen Magnetfeldes empfangen, um einen Strom vorzusehen, um die Lasermittel (5) nur anzutreiben, während an das Aufzeichnungsmedium (1) ein externes Magnetfeld angelegt wird, das ausreichend ist, die Magnetisierungsrichtung des Aufzeichnungsmediums (1) umzukehren, und während der Umkehrung des externen Magnetfeldes nicht; und
Signalumkehrungsermittlungsmittel (12) vorgesehen sind, um die binären Informationssignale zu empfangen und dadurch die Umkehrung des externen Magnetfeldes zu ermitteln, um das Umkehrungssignal herzuleiten, um die lichtmodulierenden Mittel (13) zu versorgen.

2. Vorrichtung nach Anspruch 1, wobei der Lichtstrahl eine vorgegebene Zeit lang emittiert wird, nachdem die Signalumkehrungsermittlung (12) die Umkehrung des externen Magnetfeldes ermittelt haben.

3. Vorrichtung nach Anspruch 1 oder 2, wobei die lichtmodulierenden Mittel (13) durch ein Taktsignal angetrieben werden, so daß der Laserstrahl intermittierend emittiert wird.

## Revendications

1. Appareil d'enregistrement magnéto-optique pour enregistrer et reproduire des informations sur un support d'enregistrement magnéto-optique (1) ayant une direction de magnétisation perpendiculaire, l'appareil comprenant :
un dispositif laser (5) pour émettre un faisceau laser sur le support d'enregistrement (1); et
un dispositif générant un champ magnétique (7) sensible au dispositif de modulation du champ magnétique (8) pour générer un champ magnétique externe modulé selon des signaux d'informations binaires, caractérisé en ce que :
un dispositif de modulation de la lumière (13) reçoit un signal d'inversion correspondant à chaque inversion dudit champ magnétique externe, pour ne fournir un courant pour commander ledit dispositif à laser (5) que pendant que ledit support d'enregistrement (1) reçoit un champ magnétique externe suffisant pour inverser la direction de magnétisation dudit support d'enregistrement (1) et pas pendant l'inversion du champ magnétique externe; et
un dispositif de détection de l'inversion du signal (12) est fourni pour recevoir les signaux d'informations binaires et pour détecter ainsi l'inversion du champ magnétique externe afin de dériver ledit signal d'inversion pour alimenter ledit dispositif de modulation de la lumière (13).

2. Appareil selon la revendication 1 dans lequel ledit faisceau lumineux est émis pendant une période prédéterminée après que ledit dispositif de détection de l'inversion du signal (12) ait détecté l'inversion dudit champ magnétique externe.

3. Appareil selon la revendication 1 ou 2 dans lequel ledit dispositif de modulation de la lumière (13) est commandé par un signal d'horloge de sorte que ledit faisceau laser est émis de façon intermittente.
